# EUROPÄISCHE PATENTSCHRIFT

(11) **EP 0 512 129 B1**
(45) Veröffentlichungstag und Bekanntmachung des Hinweises auf die Patenterteilung: **23.08.1995**
(21) Anmeldenummer: 91107186.8
(22) Anmeldetag: 03.05.1991
(51) Int. Cl.: G01L 9/00

(54) **Drucksensor**
Pressure transducer
Capteur de pression

(43) Veröffentlichungstag der Anmeldung: 11.11.1992
(73) Patentinhaber: SIEMENS AKTIENGESELLSCHAFT, 80333 München (DE)
(72) Erfinder: Grandke, Thomas, Dr., Dipl.Phys., W-8521 Möhrendorf (DE)

(56) Entgegenhaltungen:
- DE-A- 3 008 573
- US-A- 2 755 667
- PATENT ABSTRACTS OF JAPAN, vol. 6, no. 88 (P-118)(966), 26.Mai 1982 & JP-A-57 023 833
- SOVIET INVENTIONS ILLUSTRATED, Week 8733, 26. August 1987, Derwent Publications Ltd., London, GB; & SU-A-1281523

## Beschreibung

Die Erfindung bezieht sich auf einen Drucksensor mit einer Membran, deren Durchbiegung als Maß für den Druck p vorgesehen ist.

Druckmeßwandler können bekanntlich den Druck einer Flüssigkeit oder eines Gases in eine mechanische Auslenkung umwandeln, die zum Verändern eines Widerstandes oder einer Induktivität oder auch einer Kapazität benutzt werden kann. Es kann beispielsweise ein Gehäuseteil des Meßwandlers als elastische Membran ausgebildet und mit einer ringförmigen Meßelektrode versehen sein. In einer Ausnehmung des anderen Gehäuseteils befindet sich eine weitere Elektrode. Aus der Auslenkung der Membran ergibt sich eine Kapazitätsänderung, die als Maß für den Druck verwendet wird (DE-A 27 06 505).

Es ist ein Feldemitterarray bekannt, das als Kathode für Vakuumröhren und andere elektronische Bauelemente verwendet werden kann. Es enthält eine Vielzahl von Emitterpyramiden, die auf der Oberfläche eines Halbleitersubstrats angeordnet sind und die beim Anlegen eines elektrischen Feldes Elektronen emittieren. Diese Emitterpyramiden sind jeweils in einem Hohlraum einer dielektrischen Schicht des Halbleitersubstrats angeordnet. Die freie Flachseite der dielektrischen Schicht ist von einer Metallstruktur aus elektrisch leitendem Material bedeckt, die gegenüber den Emitterpyramiden und dem Substrat auf positivem Potential liegt und im Bereich der Emitterpyramiden jeweils mit einer Öffnung versehen ist. Jede Pyramide enthält einen in Sperrichtung betriebenen pn-Übergang. Dadurch wird der Emissionsstrom auf einem konstanten Wert gehalten (US-A-4 513 308).

Aus "Soviet Inventions Illustrated", week 8733, 26.8.87, Derwent Publications, Ltd., London, GB und der zugehörigen SU-A-1 281 523 ist ein Drucksensor kekannt, bei dem der Strom einer aus einer Elektrode auf einer Membran und einer weiteren Elektrode gebildeten Meßdiode sich in Abhängigkeit von einem an der Membran anliegenden Druck ändert und als Drucksignal herangezogen wird.

Der Erfindung liegt die Aufgabe zugrunde, einen unempfindlichen Drucksensor mit einer Membran anzugeben, mit dem auch geringe Drücke erfaßt werden können und der unempfindlich ist gegen äußere Störungen.

Diese Aufgabe wird erfindungsgemäß gelöst mit den Merkmalen des Anspruchs 1. Oberhalb des Emitterelementes ist die Membran angeordnet, deren Abstand zur Feldemitterspitze sich bei Durchbiegung unter Druckbelastung ändert. Dadurch erhält man eine entsprechende Änderung des elektrischen Feldes an dem Emitterelement und somit eine Änderung des gemessenen Feldemissionsstromes in Abhängigkeit vom anliegenden Druck.

Diese Ausführungsform eines Feldemissions-Drucksensors ist unempfindlich gegen elektromagnetische Störungen und radioaktive Strahlung und kann auch bei hohen Betriebstemperaturen eingesetzt werden.

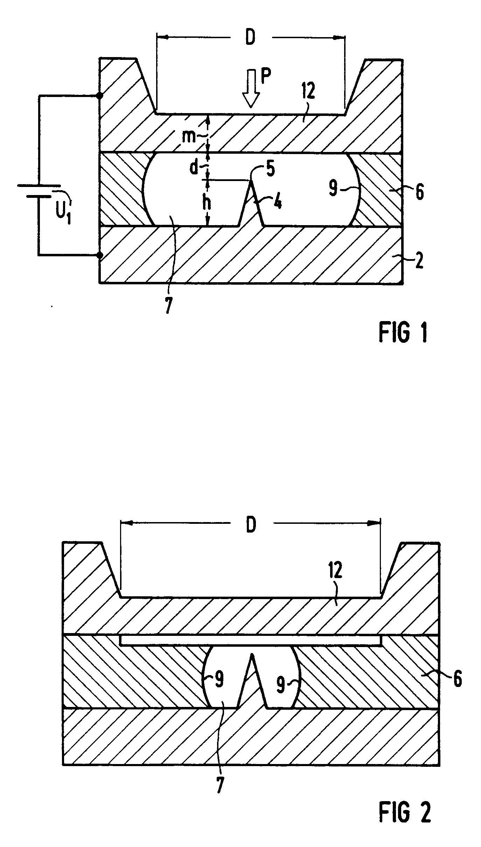

Zur weiteren Erläuterung der Erfindung wird auf die Figuren 1 bis 6 Bezug genommen, in denen verschiedene Ausführungsformen eines Drucksensors gemäß der Erfindung schematisch im Schnitt dargestellt sind.

In der in Figur 1 dargestellten Ausführungsform eines Drucksensors gemäß der Erfindung sind ein Substrat mit 2, ein Emitterelement mit 4, dessen Spitze mit 5, eine dielektrische Schicht mit 6 sowie eine Membran mit 12 bezeichnet. Das Substrat 2 kann aus einem Halbleitermaterial, beispielsweise Silizium, und die dielektrische Schicht 6 beispielsweise aus Siliziumdioxid SiO₂ bestehen. Die Membran 12 besteht wenigstens teilweise aus einem Halbleitermaterial, vorzugsweise Silizium oder aus einem elektrisch leitendem Material, vorzugsweise Metall.

Das Emitterelement 4 ist auf dem Substrat 2 in einem Hohlraum 7 angeordnet, dessen Seitenwände 9 von der dielektrischen Schicht 6 gebildet werden. Die Weite des Hohlraums 7 kann vorzugsweise etwa gleich dem Durchmesser D der Membran 12 gewählt sein, um eine Durchbiegung annähernd des gesamten elastischen Bereichs der Membran 12 zu gewährleisten. Das Emitterelement 4 kann beispielsweise als Nadel, Kegel, Pyramide oder auch als Schneide ausgebildet sein. Es kann aus Halbleitermaterial, beispielsweise Silizium, oder auch aus elektrisch leitendem Material, beispielsweise Metall, insbesondere einem hochschmelzenden Metall, sowie einer Kombination dieser Materialien bestehen. Der Durchmesser D und die Dicke m der Membran 12 werden in Abhängigkeit vom Druck gewählt. Der Durchmesser D kann beispielsweise etwa 5 bis 10000 »m und vorzugsweise etwa 100 bis 5000 »m betragen. Die Dicke m wird im allgemeinen wenigstens etwa 1 »m betragen und 1000 »m nicht wesentlich überschreiten und vorzugsweise zwischen etwa 5 und 500 »m gewählt. Der Abstand d der Spitze 5 von der Membran 12 kann in der gleichen Größenordnung wie die Höhe h der Spitze 5 gewählt werden und beispielsweise etwa 0,5 bis 10 »m, insbesondere etwa 1 bis 3 »m, betragen.

Zwischen der Membran 12 und der Spitze 5 des Emitterelements 4 wird eine Spannung U₁ angelegt, die im allgemeinen 100 V nicht wesentlich überschreitet. Unter einem vorbestimmten Druck p biegt sich die Membran 12 durch und der Abstand d zwischen der Membran 12 und der Spitze 5 ändert sich entsprechend. Damit ändert sich das lokale elektrische Feld an der Spitze 5 und somit auch der Feldemissionsstrom, der dann als Maß für den Druck P herangezogen werden kann.

Der so entstehende Feldemissions-Drucksensor kann aber beispielsweise auch so betrieben werden, daß der Feldemissionsstrom durch Regelung der Spannung U₁ konstantgehalten wird und die Spannung U₁ als Maß für den anliegenden Druck P ausgewertet wird.

Die Herstellung des Emitterelementes 4, der dielektrischen Schicht 6 sowie der Membran 12 kann vorzugsweise mit den bekannten Verfahren der Mikrostrukturtechnologie, beispielsweise durch Ätzen, erfolgen.

Figur 2 zeigt eine Ausführungsform, bei der die Weite des Hohlraums 7 kleiner als der Durchmesser D der Membran gewählt ist. Die Seitenwände 9 des Hohlraums 7 sind mit einer Struktur versehen, insbesondere mit einer sich in Richtung der Membran 12 öffnenden Stufenstruktur aus vorzugsweise jeweils zwei Stufen auf jeder Seite in der dielektrischen Schicht 6. Dadurch liegt die Membran 12 auf den oberen Stufen, deren Abstand vorzugsweise dem Durchmesser D der Membran 12 entspricht, und kann sich ab einem bestimmten Druck auf die nach innen versetzten unteren Stufen auflegen.

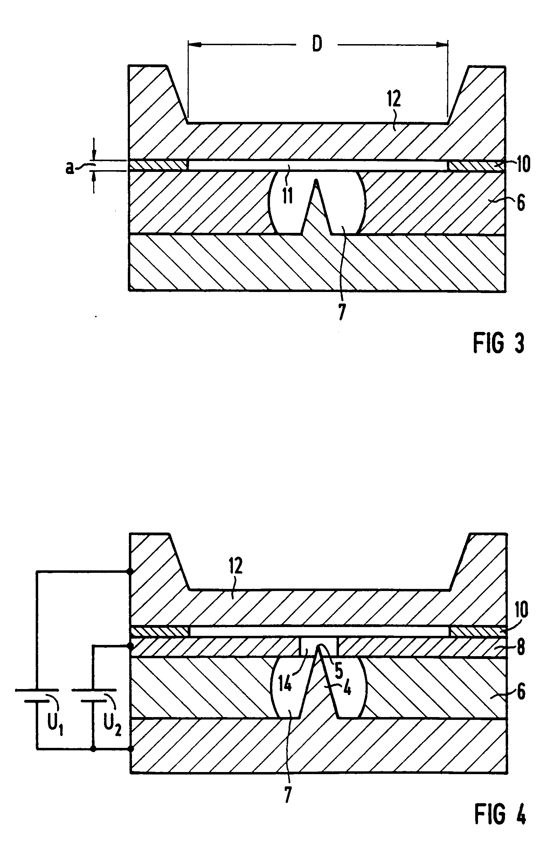

In der vorteilhaften Ausführungsform gemäß Figur 3 ist zwischen der dielektrischen Schicht 6 und der Membran 12 eine Schicht als Abstandhalter 10 angeordnet. Dieser Abstandhalter 10 ist im Bereich über dem Hohlraum 7 mit einer Öffnung 11 versehen, deren Weite wesentlich größer ist als die Weite der Öffnung des Hohlraums 7 und vorzugsweise annähernd gleich ist dem Durchmesser D der Membran 12. Dadurch kann sich annähernd der gesamte elastische Bereich der Membran 12 durchbiegen und die dielektrische Schicht 6 kann außerdem bei hohen Drücken als Überlastbett für die Membran 12 dienen. Der Abstand a zwischen der Membran 12 und der dielektrischen Schicht 6 wird durch die Dicke des Abstandhalters 10 bestimmt und wird vorzugsweise in der Größenordnung der doppelten Durchbiegung der Membran 12 bei Nenndruck gewählt und im allgemeinen 5 »m nicht wesentlich überschreiten.

In einer besonders vorteilhafte Ausführungsform des Feldemissions-Drucksensors gemäß Figur 4 ist zwischen der dielektrischen Schicht 6 und dem Abstandhalter 10 eine Struktur 8 angeordnet, die im Bereich über dem Hohlraum 7 mit einem Fenster 14 versehen ist und vorzugsweise aus Metall bestehen kann. Der Abstandhalter 10 besteht in dieser Ausführungsform aus einem elektrisch isolierenden Material, beispielsweise aus Siliziumdioxid SiO₂, zur Isolation der Membran 12 von der Struktur 8.

Zwischen der Struktur 8 und der Spitze 5 wird eine Spannung U₂ angelegt, die kleiner ist als die Spannung U₁ und als Extraktionsspannung zum Steuern eines Feldemissionsstroms aus der Spitze 5 dient. Die Spitze 5 des Emitterelements 4 kann dabei vorzugsweise in das Fenster 14 hineinragen, um das lokale elektrische Feld an der Spitze 5 und damit den Feldemissionsstrom zu vergrößern. Zum Messen des Druckes wird entweder der Feldemissionsstrom herangezogen oder man hält durch Regelung der Spannungen U₁ und/oder U₂ den Feldemissionsstrom konstant und wertet die Spannungen U₁ und U₂ aus.

Durch die vorteilhafte Anordnung der Struktur 8 zwischen der Membran 12 und dem Emitterelement 4 erhält man ein Überlastbett für die Membran 12. Da sich die Membran 12 bereits bei verhältnismäßig geringen Durchbiegungen an die Struktur 8 anlegen kann, erhält man für eine solche Ausgestaltung eine hohe Überlastfestigkeit. Das bei einem Kurzschluß zwischen der Membran 12 und der Struktur 8 entstehende elektrische Signal kann von einer Ansteuerungselektronik ausgewertet werden.

Durch die Spannungen U₁ und U₂ wirkt auf die Membran 12 auch eine elektrostatische Kraft, welche die Messung beeinflussen kann. Führt man nur einen Teil der Membran 12 als Elektrode aus, so kann dieser Effekt begrenzt werden.

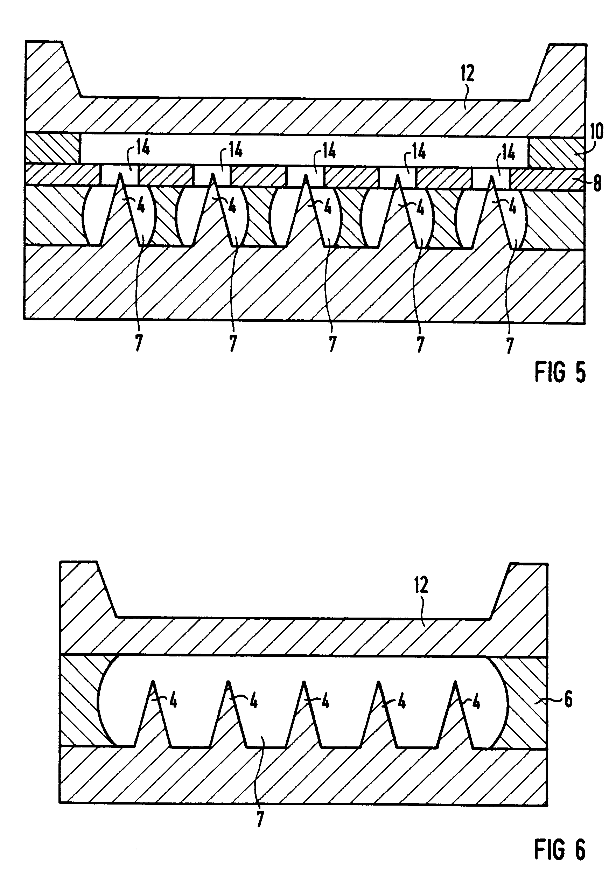

Werden gemäß Figur 5 mehrere Emitterelemente 4 in jeweils einem eigenen Hohlraum 7 und jeweils einem eigenen Fenster 14 in der als Extraktionselektrode dienenden Struktur 8 unter einer gemeinsamen Membran 12 angeordnet, so wird der Feldemissionsstrom entsprechend erhöht und somit die Messung erleichtert. In der praktischen Ausführungsform eines Feldemissions-Drucksensors kann beispielsweise ein Emitterarray mit 1000 Emitterelementen vorgesehen sein, von denen in der Figur nur fünf dargestellt sind.

Fehlt die Struktur 8 und damit die Extraktionsspannung U₂, wie in den Ausführungsformen gemäß den Figuren 1, 2 und 3, so können in der in Figur 6 dargestellten vorteilhaften Ausführungsform auch viele Emitterelemente 4 als Emitterarray in einem gemeinsamen Hohlraum 7 unter einer gemeinsamen Membran 12 angeordnet sein. Dadurch kann wiederum der Feldemissionsstrom erheblich vergrößert werden. Für einen Feldemissionsstrom von beispielsweise 100 »A können vorzugsweise etwa 1000 Emitterelemente in dem Hohlraum 7 angeordnet sein.

Ist die Weite des Hohlraums 7 kleiner als der Durchmesser D der Membran 12, so können als Überlastsicherung für die Membran 12 wie bei der in Figur 2 dargestellten Ausführungsform mit nur einem Emitterelement 4 auch in der Ausführungsform gemäß Figur 6 entweder die Seitenwände 9 des Hohlraums 7 strukturiert sein oder ein Abstandhalter zwischen Membran 12 und dielektrischer Schicht 6 angeordnet werden.

Die Verbindung der einzelnen Schichten in den Ausführungsformen des Feldemissions-Drucksensors kann beispielsweise mit dem bekannten Verfahren des "anodic bonding" erfolgen.

## Patentansprüche

1. Drucksensor mit folgenden Merkmalen:
a) eine wenigstens teilweise aus elektrisch leitendem Material bestehende Membran (12), die sich unter Belastung mit einem zu messenden Druck durchbiegt;
b) gegenüber der Membran (12) ist wenigstens ein Emitterelement (4) mit einer Spitze (5) oder Schneide zur Feldemission von Elektronen bei Anlegen einer Spannung (U₁) zwischen Membran (12) und Spitze (5) bzw. Schneide beabstandet angeordnet und
c) das wenigstens eine Emitterelement (4) ist auf einem Substrat (2) in einem Hohlraum (7) angeordnet, dessen Seitenwände (9) wenigstens teilweise von einer dielektrischen Schicht (6) gebildet sind, wobei
d) sich der Abstand (d) zwischen Spitze (5) bzw. Schneide des wenigstens einen Emitterelements (4) und der Membran (12) bei der Durchbiegung der Membran (12) in Abhängigkeit vom Druck ändert und der Feldemissionsstrom von Elektronen aus der Spitze (5) bzw. Schneide in Abhängigkeit von diesem Abstand (d) zur Bestimmung des Drucks verwendbar ist.

2. Drucksensor nach Anspruch 1, **dadurch gekennzeichnet,** daß die Seitenwände (9) des Hohlraumes (7) strukturiert sind.

3. Drucksensor nach Anspruch 1, **dadurch gekennzeichnet,** daß zwischen der dielektrischen Schicht (6) und der Membran (12) ein Abstandhalter (10) vorgesehen ist.

4. Drucksensor nach Anspruch 3, **dadurch gekennzeichnet,** daß die Weite der Öffnung (11) des Abstandhalters (10) wesentlich größer ist als die Weite des Hohlraumes (7) in Richtung der Flachseite des Substrats (2).

5. Drucksensor nach Anspruch 3 oder 4, **dadurch gekennzeichnet,** daß die Weite der Öffnung (11) des Abstandhalters (10) wenigstens annähernd gleich dem Durchmesser D der Membran (12) ist.

6. Drucksensor nach einem der Ansprüche 3 bis 5, **dadurch gekennzeichnet,** daß die der Membran (12) zugewandte Flachseite der dielektrischen Schicht (6) mit einer elektrisch leitenden Struktur (8) versehen ist, die in einem Bereich über dem Emitterelement (4) ein Fenster (14) enthält, und daß der Abstandhalter (10) wenigstens teilweise aus elektrisch isolierendem Material besteht.

7. Drucksensor nach Anspruch 6, **dadurch gekennzeichnet,** daß die Weite der Öffnung (11) des Abstandhalters (10) wesentlich größer ist als die Weite des Fensters (14) der Struktur (8).

8. Drucksensor nach Anspruch 6, **dadurch gekennzeichnet,** daß eine Vielzahl von Emitterelementen (4) vorgesehen ist, die jeweils in einem eigenen Hohlraum (7) und in einem eigenen Fenster (14) angeordnet sind.

9. Drucksensor nach einem der Ansprüche 1 bis 5, **dadurch gekennzeichnet,** daß eine Vielzahl von Emitterelementen (4) vorgesehen ist, die in einem gemeinsamen Hohlraum (7) angeordnet sind.

## Claims

1. Pressure sensor having the following features:
a) a diaphragm (12) which consists at least partially of electrically conductive material and which bends under loading with a pressure to be measured;
b) opposite the diaphragm (12) there is arranged, with spacing, at least one emitter element (4) having a tip (5) or edge, for the field emission of electrons when a voltage (U₁) is applied between the diaphragm (12) and the tip (5) or edge, and
c) the emitter element (4), of which there is at least one, is arranged on a substrate (2) in a cavity (7) whose side walls (9) are formed at least partially by a dielectric layer (6), wherein
d) the distance (d) between the tip (5) or edge of the emitter element (4), of which there is at least one, and the diaphragm (12), changes in dependence upon pressure with the deflection of the diaphragm (12), and the field emission current of electrons from the tip (5) or edge can be used in dependence upon this distance (d) for determining the pressure.

2. Pressure sensor according to claim 1, characterised in that the side walls (9) of the cavity (7) are structured.

3. Pressure sensor according to claim 1, characterised in that a spacer (10) is provided between the dielectric layer (6) and the diaphragm (12).

4. Pressure sensor according to claim 3, characterised in that the width of the opening (11) in the spacer (10) is substantially greater than the width of the cavity (7) in the direction of the flat face of the substrate (2).

5. Pressure sensor according to claim 3 or 4, characterised in that the width of the opening (11) in the spacer (10) is at least approximately equal to the diameter (D) of the diaphragm (12).

6. Pressure sensor according to one of claims 3 to 5, characterised in that the flat face of the dielectric layer (6) facing towards the diaphragm (12) is provided with an electrically conductive structure (8) which contains a window (14) in the region above the emitter element (4), and in that the spacer (10) consists at least partially of electrically insulating material.

7. Pressure sensor according to claim 6, characterised in that the width of the opening (11) in the spacer (10) is substantially greater than the width of the window (14) in the structure (8).

8. Pressure sensor according to claim 6, characterised in that there is provided a plurality of emitter elements (4), each of which is arranged in its own cavity (7) and in its own window (14).

9. Pressure sensor according to one of claims 1 to 5, characterised in that there is provided a plurality of emitter elements (4) which are arranged in a common cavity (7).

## Revendications

1. Capteur de pression présentant les caractéristiques suivantes :
a) une membrane (12) au moins partiellement en un matériau électriquement conducteur, qui fléchit sous la charge produite par une pression mesurée,
b) en vis-à-vis et à distance de la membrane (12) est disposé au moins un élément émetteur (4) ayant une pointe (5) ou un tranchant pour l'émission de champ d'électrons lors de l'application d'une tension (U₁) entre la membrane (12) et la pointe (5) ou le tranchant, et
c) le ou les éléments émetteurs (4) sont disposés sur un substrat (2) dans une cavité (3), dont les parois latérales (9) sont formées au moins en partie par une couche diélectrique (6),
d) la distance (d) entre la pointe (5) ou le tranchant du au moins un élément émetteur (4) et la membrane (12) lors du fléchissement de la membrane (12) varie en fonction de la pression, et le courant d'émission de champ d'électrons à partir de la pointe (5) ou du tranchant peut être utilisé en fonction de cette distance (d) pour déterminer la pression.

2. Capteur de pression suivant la revendication 1, caractérisé par le fait que les parois latérales (9) de la cavité (7) sont structurées.

3. Capteur de pression suivant la revendication 1, caractérisé par le fait qu'une entretoise (10) est prévue entre la couche diélectrique (6) et la membrane (12).

4. Capteur de pression suivant la revendication 3, caractérisé par le fait que la largeur de l'ouverture (11) de l'entretoise (10) est nettement supérieure à la largeur de la cavité (7) dans la direction du côté plat du substrat (2).

5. Capteur de pression suivant la revendication 3 ou 4, caractérisé par le fait que la largeur de l'ouverture (11) de l'entretoise (10) est au moins approximativement égale au diamètre D de la membrane (12).

6. Capteur de pression suivant l'une des revendications 3 à 5, caractérisé par le fait que la face plane, tournée vers la membrane (12), de la couche diélectrique (6) est munie d'une structure électriquement conductrice (8), qui comporte une fenêtre (14) dans une zone au-dessus de l'élément émetteur (4), et que l'entretoise (10) est au moins en partie en un matériau électriquement isolant.

7. Capteur de pression suivant la revendication 6, caractérisé par le fait que la largeur de l'ouverture (11) de l'entretoise (10) est nettement supérieure à la largeur de la fenêtre (14) de la structure (8).

8. Capteur de pression suivant la revendication 6, caractérisé par le fait que sont prévus une multiplicité d'éléments émetteurs (4), qui sont disposés chacun dans une cavité (16) qui leur est propre et dans une fenêtre (14) qui leur est propre.

9. Capteur de pression suivant l'une des revendications 1 à 5, caractérisé par le fait que sont prévus une multiplicité d'éléments émetteurs (4), qui sont disposés dans une cavité commune (7).
